# EUROPEAN PATENT SPECIFICATION

(11) **EP 1 772 336 B1**
(45) Date of publication and mention of the grant of the patent: **02.04.2008**
(21) Application number: 05021947.6
(22) Date of filing: 07.10.2005
(51) Int. Cl.: B60T 17/00, B25B 27/00, B60S 5/00

(54) **Adjustor for a brake**
Zurückstellwerkzeug für eine Bremse
Outil de ré-ajustement pour frein

(43) Date of publication of application: 11.04.2007
(73) Proprietor: Cosda Manufacturing Company, Taiping Taichung Hsien (TW)
(72) Inventor: Liu, Lai-Chen, Taiping Taichung Hsien (TW)
(74) Representative: Viering, Jentschura & Partner

(56) References cited:
- EP-A- 1 020 255
- US-A- 6 134 764
- US-B1- 6 195 863

## Description

### Background of Invention

### 1. Field of Invention

The present invention relates to a slave cylinder for a brake and, more particularly, to an adjustor for a piston of a slave cylinder of a brake.

### 2. Related Prior Art

A brake system of a car includes a brake pedal, a master cylinder, four slave cylinders and four brakes. As the brake pedal is trodden, the master cylinder is actuated. The master cylinder transfers pressurized liquid to the slave cylinders. The slave cylinders actuate the brakes in order to stop the wheels of the car. Each brake includes a drum or disc and two brake shoes for rubbing against and stopping the drum or disc. This wears away the brake shoes so that the gaps between the drum or disc and the brake shoes get larger. The pistons of the slave cylinders extend more in order to compensate the larger gaps. When the brake shoes are too thin for normal operation, they must be replaced with new ones. The pistons of the slave cylinders must be pushed back to their original positions before such replacement can be conducted. Adjustors are used to this end.

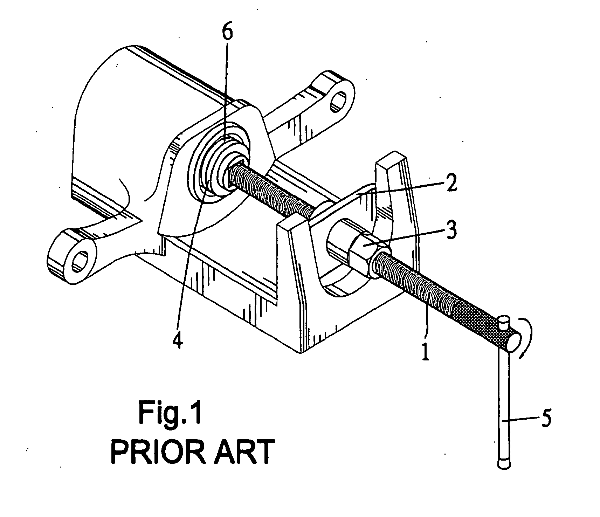

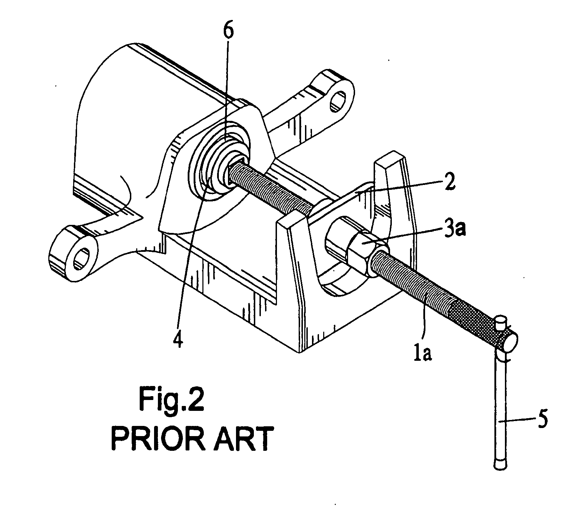

Referring to Figs. 1 and 2, a conventional adjustor includes a stationary plate 2, a dextrorotary threaded nut 3 or a levorotary threaded nut 3a attached to the stationary plate 2, a dextrorotary threaded bolt 1 or a levorotary threaded bolt 1 a engaged with the dextrorotary threaded nut 3 or a levorotary threaded nut 3a, a pusher 4 for pushing a piston of the slave cylinder 6, and a handle 5 operable in order to rotate the threaded bolt 1 or 1a. It is however exhausting to rotate the threaded bolt 1 or 1a. Moreover, it is inconvenient to keep both of the threaded bolts 1 and 1a since the dextrorotary threaded nuts 3 are used in some cars and the levorotary threaded nuts 3a are used in some other cars.

Document EP 1 020 255 A2 discloses an adjustor for a piston of a slave cylinder of a brake, the adjustor comprises a stationary plate attachable to the slave cylinder, a cylinder attached to the stationary plate, a piston movable in the cylinder, a rod extended through the end wall of the cylinder at the side of the stationary plate and connected to the piston, a handle connected to the cylinder so that pressurized air can enter the cylinder through the handle and drive the piston and hence the rod while going in the cylinder, an inlet valve put on the handle in order to control the inlet of the pressurized air into the cylinder through the handle, and an outlet valve put on the handle in order to control the release of the pressurized air from the cylinder through the handle.

The present invention is therefore intended to obviate or at least alleviate problems encountered in prior art.

### Summary of Invention

According to the present invention, there is disclosed an adjustor for a piston of a slave cylinder of a brake. The adjustor includes a stationary plate attachable to the slave cylinder, a cylinder attached to the stationary plate, a piston movable in the cylinder, a rod extended through the cylinder and connected to the piston, a handle connected to the cylinder, an inlet valve put on the handle, and an outlet valve put on the handle. Pressurized air can enter the cylinder through the handle and drive the piston and hence the rod while going in the cylinder. The inlet valve controls the inlet of the pressurized air into the cylinder through the cylinder handle. The outlet valve controls the release of the pressurized air from the cylinder through the handle. The handle is mounted on the cylinder at an angle with respect to the centre line of the rod. The rod extends through the end wall of the cylinder opposite the end wall near the stationary plate, and a rod pulling handle is attached to the rod on the portion protruding from the cylinder opposite the stationary plate in order to facilitate pulling the rod after the pressurized air is released from the cylinder.

An advantage of the adjustor according to the present invention is that the outlet valve enables easy release of the pressurized air from the cylinder through the handle.

Another advantage of the adjustor according to the present invention is the handle facilitates the handling of the adjustor.

Other advantages and novel features of the invention will become more apparent from the following detailed description in conjunction with the drawings.

### Brief Description of Drawings

The present invention will be described through detailed description of the preferred embodiment referring to the drawings.
Fig. 1 is a perspective view of a conventional adjustor for a slave cylinder of a brake.
Fig. 2 is a perspective view of another conventional adjustor for a slave cylinder of a brake.

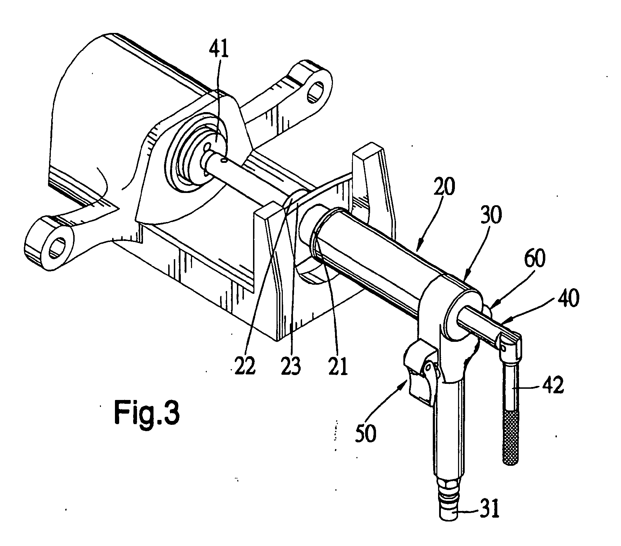

Fig. 3 is a perspective view of an adjustor for a slave cylinder of a brake according to the preferred embodiment of the present invention.
Fig. 4 is a cross-sectional view of the adjustor shown in Fig. 3.
Fig. 5 is an exploded view of the adjustor shown in Fig. 3.
Fig. 6 is a cross-sectional view of the adjustor shown in Fig. 3.
Fig. 7 is similar to Fig. 6 but shows the adjustor in another position.
Fig. 8 is a cross-sectional view of the adjustor shown in Fig. 7.
Fig. 9 is similar to Fig. 6 but shows the adjustor in another position.

### Detailed Description of Preferred Embodiment

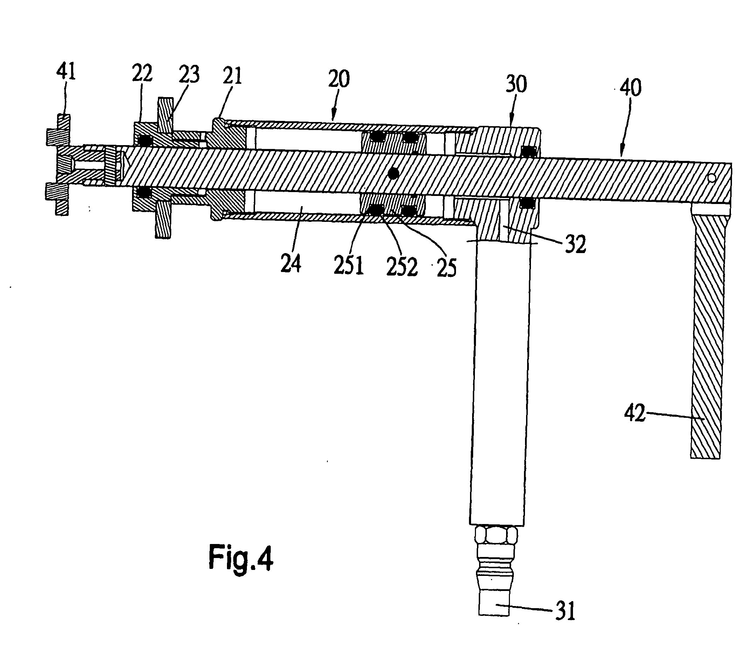

Referring to Fig. 4, there is shown an adjustor for a slave cylinder of a brake. The adjustor includes a stationary plate 23 attachable to the slave cylinder of a brake system, a cylinder 20 attached to the stationary plate 23, a handle 30 connected to the cylinder 20, a rod 40 extended through and connected to a piston 25 (Fig. 4) in the cylinder 20, an inlet valve 50 put on a side of the handle 30, and an outlet valve 60 put on an opposite side of the handle 30.

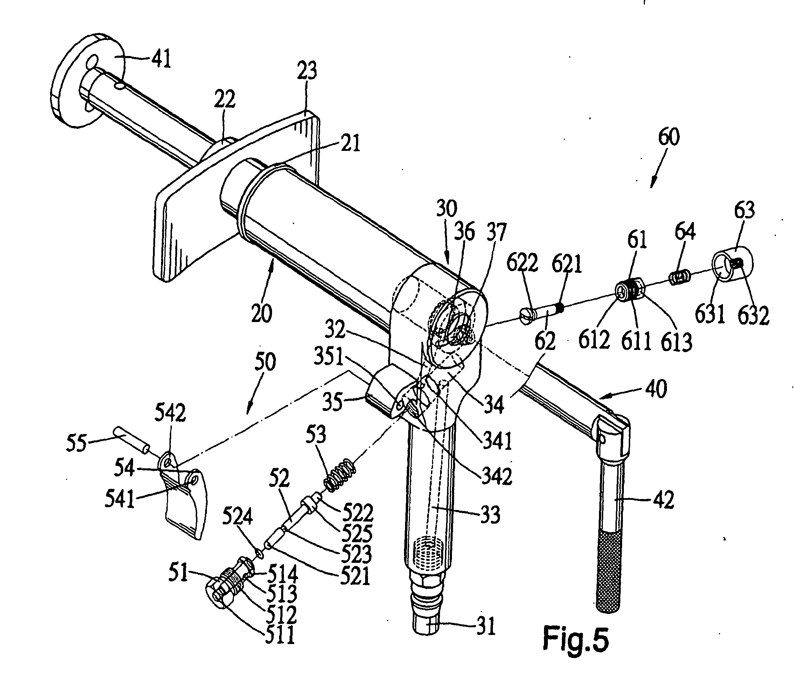

The cylinder 20 is attached to the stationary plate 23 by means of two fasteners 21 and 22 (Fig. 5). At an end of the handle 30 is formed a joint 31 for connection to a pipe (not shown) leading to an air compressor (not shown). Thus, pressurized air can enter the cylinder 20 through the handle 30. While going in the cylinder 20, the pressurized air drives the piston 25 and hence the rod 40 in order to push the piston of the slave cylinder. A pusher 41 is attached to an end of the rod 40 for contact with the piston of the slave cylinder. A rod pulling handle 42 is attached to the other end of the rod 40. The inlet valve 50 controls the inlet of the pressurized air into the cylinder 20 through the cylinder handle 30. The outlet valve 60 controls the outlet of the pressurized air from the cylinder 20 through the cylinder handle 30. After the pressurized air is released from the cylinder 20, the handle 42 can be operated in order to pull the rod 40.

Referring to Fig. 4, the cylinder 20 defines a space 24 for receiving the piston 25 and the rod 40. The piston 25 defines two grooves 251 in the periphery thereof for receiving two piston rings 252. The rod 40 is inserted through the piston 25. The rod 40 is connected to the piston 25 by means of a pin (not numbered).

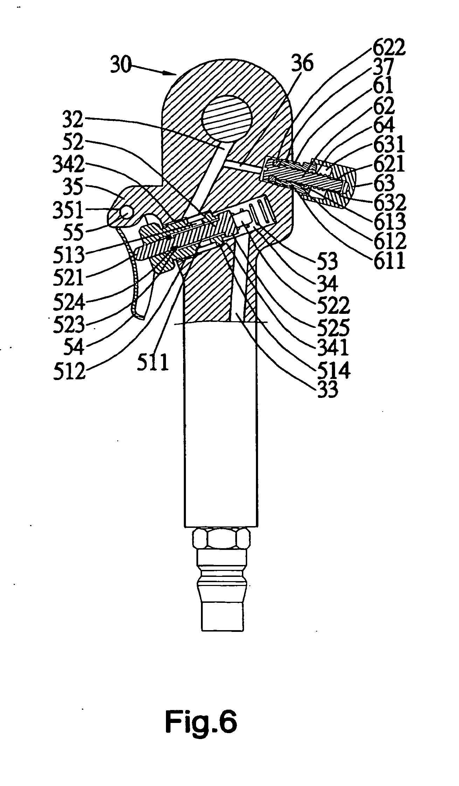

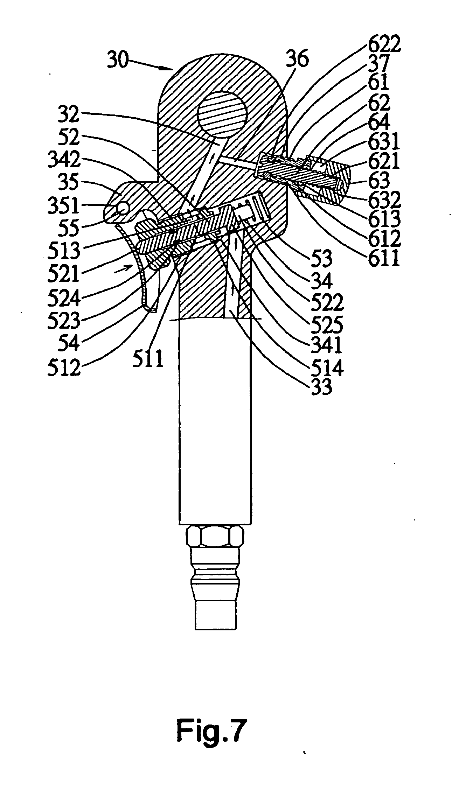

Referring to Figs. 6 and 7, the handle 30 defines a channel 32 communicated with the space 24, a space 34 communicated with the channel 32, a channel 33 communicated with the space 34, a channel 36 communicated with the channel 32, and a space 37 communicated with the channel 36. The space 34 includes two sections, thus forming a shoulder 341 between the sections. A thread 342 is formed on the wall of external one of the sections of the space 34. On the handle 30 is formed an ear 35 near the space 34. The ear 35 defines an aperture 351.

The inlet valve 50 is put substantially in the space 34. The inlet valve 50 includes a housing 51, a core 52, a spring 53, and a lever 54. The housing 51 includes a thread 512 and a flange 514 formed thereon. The thread 512 is engaged with the thread 342 in order to attach the inlet valve 50 to the handle 30. The flange 514 is put against the shoulder 341. The housing 51 defines a longitudinal channel 511 and a transverse channel 513 communicated with the longitudinal channel 511.

The core 52 includes a first round end 521, a second round end 522, a groove 523 defined therein near the first end 521 and a flange 525 formed thereon near the second end 522. A seal 524 is put in the groove 523. The core 52 is inserted through the longitudinal channel 511. The first end 521 is exposed from a first end of the housing 51. The second end 522 and the flange 525 are exposed from an opposite second end of the housing 51.

The spring 53 is put in the internal section of the space 34. The spring 53 is compressed between a closed end of the space 34 and the flange 525 in order to push the flange 525 towards the second end of the housing 51.

The lever 54 includes two ears 542 each defining an aperture 541. A pin 55 is fit in the aperture 351 and 541 in order to attach the lever 54 to the ear 35. The lever 54 is put against the first end 521 of the rod 52. The lever 54 can be operated in order to push the rod 52.

The outlet valve 60 is put substantially in the space 37. The outlet valve 60 includes a housing 61, a core 62, a spring 64, and a button 63. On the housing 61 is formed a thread 611 engaged with a thread (not numbered) formed on the wall of the space 37 in order to attach the housing 61 to the handle 30. The housing 61 defines a recess 613 defined in a first end thereof and a longitudinal channel 612 defined in an opposite second end thereof.

The core 62 includes a first end and an enlarged second end opposite to the first end. A thread 621 is formed on the core 62 near the first end. A seal 622 is put on the core 62 against the enlarged second end. The core 62 is inserted through the housing 61. The thread 621 is exposed from the first end of the housing 61. The seal 622 is exposed from the second end of the housing 61.

The spring 64 is put on the core 62 and in the recess 613.

The button 63 defines a space 631 and a screw hole 632. The screw hole 632 receives the thread 621 in order to attach the button 63 to the core 62. The spring 64 is compressed between the button 63 and the housing 61 in order to push the button 63 from the first end of the housing 61. Thus, the seal 622 is pulled towards the second end of the housing 61.

Referring to Fig. 7, the lever 54 is operated. The core 52 is pushed against the spring 53. The flange 525 is moved from the second end of the housing 51. Thus, the pressurized air can go through the channel 33, the internal section of the space 34, the longitudinal channel 511, the transverse channel 513, and the channel 32.

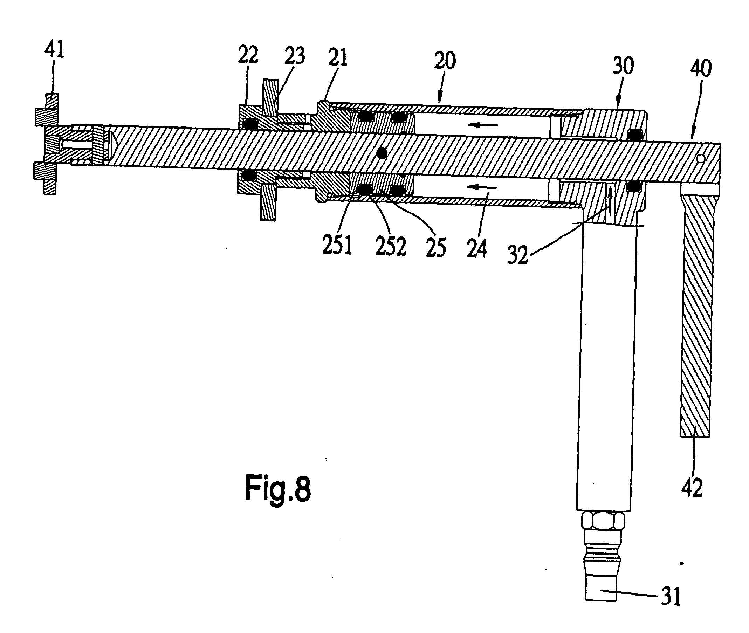

Referring to Fig. 8, the pressurized air can go into the space 24 from the channel 32. While going in the space 24, the pressurized air drives the piston 25 and hence the rod 40 in order to push the piston of the slave cylinder.

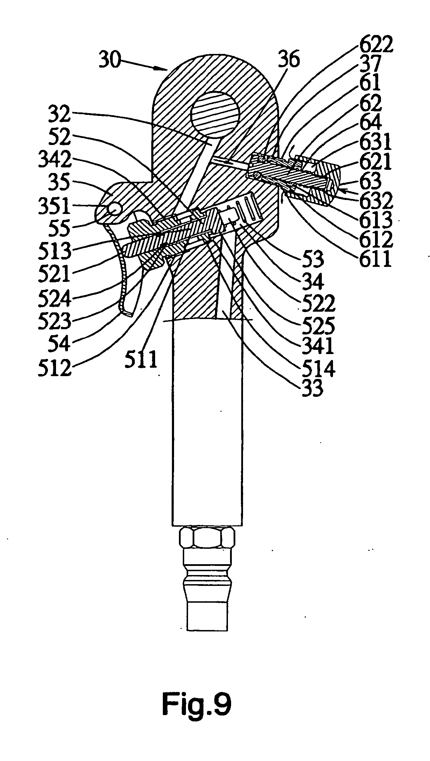

Referring to Fig. 9, the button 63 is pressed. The core 62 is pushed against the spring 64. The seal 622 is moved from the second end of the housing 61. Thus, the pressurized air can go through the channel 32, the space 34, and the channel 612. Thus, the pressurized air is released from the cylinder 20 through the handle 30. Now, the handle 42 can be operated in order to pull the rod 40.

The adjustor according to the present invention is advantageous in several aspects. Firstly, the outlet valve 60 enables easy release of the pressurized air from the cylinder 20 through the handle 30. Secondly, the handle 30 facilitates the handling of the adjustor.

The present invention has been described through the detailed illustration of the preferred embodiment. Those skilled in the art can derive variations from the preferred embodiment without departing from the scope of the present invention as laid down in the appended claims. Therefore, the preferred embodiment shall not limit the scope of the present invention defined in the claims.

## Claims

1. An adjustor for a piston of a slave cylinder of a brake, the adjustor comprising:
a stationary plate (23) attachable to the slave cylinder;
a cylinder (20) attached to the stationary plate (23);
a piston (25) movable in the cylinder (20);
a rod (40) extended through the cylinder (20) and connected to the piston (25);
a handle (30) connected to the cylinder (20) so that pressurized air can enter the cylinder (20) through the handle (30) and drive the piston (25) and hence the rod (40) while going in the cylinder (20);
an inlet valve (50) put on the handle (30) in order to control the inlet of the pressurized air into the cylinder (20) through the handle (30); and
an outlet valve (60) put on the handle (30) in order to control the release of the pressurized air from the cylinder (20) through the handle (30); **characterized in that**
the handle (30) is mounted on the cylinder (20) at an angle with respect to the centre line of the rod (40),
the rod (40) extends through the end wall of the cylinder (20) opposite the end wall near the stationary plate (23), and
a rod pulling handle (42) is attached to the rod (40) on the portion protruding from the cylinder opposite the stationary plate (23) in order to facilitate pulling the rod (40) after the pressurized air is released from the cylinder (20).

2. The adjustor according to claim 1 wherein the cylinder (20) defines a space (24) for containing the piston (25), wherein the handle (30) comprises a first channel (32) communicated with the space (24) of the cylinder (20), a first space (34) communicated with the first channel (32) in order to contain the inlet valve (50), a second channel (33) communicated with the first space (34) on one hand and for communication with an air compressor on the other hand, a third channel (36) communicated with the first channel (32), and a second space (37) communicated with the channel (36) in order to contain the outlet valve (60).

3. The adjustor according to claim 2 wherein the inlet valve (50) comprises:
a housing (51) fit in the first space (34), the housing (51) comprising a first end, a second end, a shoulder (525) formed thereon in order divide the first space (34) into a first section and a second section, a longitudinal channel (511) communicated with the second section of the first space (34), and a transverse channel (513) communicated with the longitudinal channel (511) on one hand and communicated with the first section of the first space (34) on the other hand;
a core (52) movably extended through the housing (51), the core (52) comprising a flange (525) formed thereon in order to block the longitudinal channel (511) from the first end; and
a spring (53) compressed between a closed end of the space (34) and the flange (525) of the core (52) in order to push the shoulder (525) of the core (52) towards the second end of the housing (51).

4. The adjustor according to claim 3 wherein the core (52) comprises an external end (521) exposed from the first end of the housing (51) so that the core (52) can be pushed by the external end (521)

5. The adjustor according to claim 3 wherein the core (52) comprises an internal end (522) exposed from the second end of the housing (51) and inserted in the spring (53).

6. The adjustor according to claim 3 wherein the inlet valve (50) comprises a lever (54) connected to the handle (30) and put against the external end (521) of the core (52) so that the lever (54) is operable in order to push the core (52) by the external end (521), wherein the handle (30) comprises an ear (35) formed thereon, wherein the lever (54) comprises two ears (542) connected to the ear (35) of the handle (30).

7. The adjustor according to claim 3 wherein the inlet valve (50) comprises a seal (524) put around the core (52) in order to seal the longitudinal channel (511) near the first end, wherein the core (52) defines a groove (523) for receiving the seal (524).

8. The adjustor according to claim 3 wherein the handle (30) comprises a thread (341) formed on the wall of the first section of the first space (34), wherein the housing (51) comprises a thread (512) engaged with thread (341) of the handle (30) in order to attach the inlet valve (50) to the handle (30).

9. The adjustor according to claim 2 wherein the outlet valve (60) comprises:
a housing (61) fit in the second space (37) of the handle (30), the housing (61) comprising a first end, a second end, and a longitudinal channel (612) defined therein;
a core (62) movably extended through the housing (61), the core (62) comprises an enlarged internal end for blocking the longitudinal channel (612) from the second end; and
a spring (64) for moving the enlarged internal end of the core (62) towards the second end of the housing (61), wherein the core (62) comprises an external end exposed from the first end of the housing (61) in order to be operated.

10. The adjustor according to claim 9 wherein the outlet valve (60) comprises a button (63) connected to the external end of the core (62), wherein the spring (64) is compressed between the button (63) and the first end of the housing (61), wherein the core (62) comprises a thread (621) formed thereon near the first end, wherein the button (63) defines a screw hole (632) in order to receive the thread (621) of the core (62) so as to attach the button (63) to the core (62).

11. The adjustor according to claim 9 wherein the housing (61) comprises a recess (613) defined in the first end thereof in order to receive the spring (64).

12. The adjustor according to claim 9 wherein the outlet valve (60) comprises a seal (622) put around the core (62) against the enlarged internal end.

13. The adjustor according to claim 1 wherein the handle (30) comprises a joint (31) formed thereon for connection to a pipe leading to the air compressor.

14. The adjustor according to claim 1 comprising a pusher (41) attached to the rod (40) for contact with the piston of the slave cylinder.

## Patentansprüche

1. Einstellvorrichtung für einen Kolben eines Folgezylinders einer Bremse, wobei die Einstellvorrichtung aufweist:
eine stationäre Platte (23), die an dem Folgezylinder befestigt werden kann;
einen Zylinder (20), der an der stationären Platte (23) befestigt ist;
einen Kolben (25), der in dem Zylinder (20) bewegbar ist;
eine Stange (40), die sich durch den Zylinder (20) erstreckt und mit dem Kolben (25) verbunden ist;
einen Handgriff (30), der mit dem Zylinder (20) verbunden ist, so dass Druckluft durch den Handgriff (30) in den Zylinder (20) eintreten kann und während des Hineintretens in den Zylinder (20) den Kolben (25) und folglich die Stange (40) antreiben kann;
ein Einlassventil (50), das an dem Handgriff (30) angebracht ist, um den Einlass von Druckluft in den Zylinder (20) durch den Handgriff (30) hindurch zu steuern; und
ein Auslassventil (60) das an dem Handgriff (30) angebracht ist, um das Freisetzen der Druckluft aus dem Zylinder (20) durch den Handgriff (30) hindurch zu steuern;
**dadurch gekennzeichnet, dass**
der Handgriff (30) in einem Winkel relativ zur Mittelachse der Stange (40) an den Zylinder (20) anmontiert ist;
die Stange (40) sich durch die Endwand des Zylinders (20) hindurch erstreckt, die der Endwand in der Nähe der stationären Platte (23) gegenüberliegt; und
ein Stangenziehhandgriff (42) an dem Abschnitt der Stange (40) befestigt ist, der aus dem Zylinder an der der stationären Platte (23) gegenüberliegenden Seite herausragt, zum Erleichtern des Herausziehens der Stange (40), nachdem die Druckluft aus dem Zylinder (20) freigesetzt wurde.

2. Einstellvorrichtung gemäß Anspruch 1, wobei der Zylinder (20) einen Raum (24) zum Aufnehmen des Kolbens (25) definiert, wobei der Handgriff (30) aufweist einen ersten Kanal (32), der mit dem Raum (24) des Zylinders (20) in Verbindung steht, einen ersten Raum (34) zum Aufnehmen des Einlassventils (50), welcher mit dem ersten Kanal (32) in Verbindung steht, einen zweiten Kanal (33), der einerseits mit dem ersten Raum (34) in Verbindung steht und für die Verbindung mit einem Luftverdichter andererseits, einen dritten Kanal (36) der mit dem ersten Kanal (32) in Verbindung steht, und einen zweiten Raum (37) zum Aufnehmen des Auslassventils (60), welcher mit dem Kanal (36) in Verbindung steht.

3. Einstellvorrichtung gemäß Anspruch 2, wobei das Einlassventil (50) aufweist:
ein Gehäuse (51), das in den ersten Raum (34) eingepasst ist, wobei das Gehäuse (51) aufweist ein erstes Ende, ein zweites Ende, einen daran ausgebildeten Bund (514), um den ersten Raum (34) in einen ersten Abschnitt und einen zweiten Abschnitt zu unterteilen, einen Längskanal (511), der mit dem zweiten Abschnitt des ersten Raumes (34) in Verbindung steht, und einen Querkanal (513), der einerseits mit dem Längskanal (511) in Verbindung steht und andererseits mit dem ersten Abschnitt des ersten Raumes (34) in Verbindung steht;
einen Kern (52) der sich bewegbar durch das Gehäuse (51) erstreckt, wobei der Kern (52) einen daran ausgebildeten Bund (525) aufweist, um den Längskanal (511) von dem ersten Ende abzusperren; und
eine Feder (53), die zwischen einem geschlossenen Ende des Raumes (34) und dem Bund (525) des Kerns (52) zusammengedrückt ist, um den Bund (525) des Kerns (52) in Richtung zu dem zweiten Ende des Gehäuses (51) zu drücken.

4. Einstellvorrichtung gemäß Anspruch 3, wobei der Kern (52) ein außen liegendes Ende (521) aufweist, das aus dem ersten Ende des Gehäuses (51) freiliegt, so dass der Kern (52) mittels des außen liegenden Endes (521) geschoben werden kann.

5. Einstellvorrichtung gemäß Anspruch 3, wobei der Kern (52) ein innen liegendes Ende (522) aufweist, das aus dem zweiten Ende des Gehäuses (51) freiliegt und in die Feder (53) eingesteckt ist.

6. Einstellvorrichtung gemäß Anspruch 3, wobei das Einlassventil (50) einen Hebel (54) aufweist, der mit dem Handgriff (30) verbunden und an das außen liegende Ende (521) des Kerns (52) angelegt ist, so dass der Hebel (54) betätigt werden kann, um den Kern (52) mittels des außen liegenden Endes (521) zu schieben, wobei der Handgriff (30) eine daran ausgebildete Öse (35) aufweist, und wobei der Hebel (54) zwei Ösen (542) aufweist, die mit der Öse (35) des Handgriffs (30) verbunden sind.

7. Einstellvorrichtung gemäß Anspruch 3, wobei das Einlassventil (50) eine Dichtung (524) aufweist, die um den Kern (52) herum gelegt ist, um den Längskanal (511) in der Nähe des ersten Endes abzudichten, wobei der Kern (52) zum Aufnehmen der Dichtung (524) eine Rille (523) definiert.

8. Einstellvorrichtung gemäß Anspruch 3, wobei der Handgriff (30) ein Gewinde (341) aufweist, das an der Wand des ersten Abschnitts des ersten Raumes (34) ausgebildet ist, wobei das Gehäuse (51) ein Gewinde (512) aufweist, das mit dem Gewinde (341) des Handgriffs (30) in Eingriff ist, um das Einlassventil (50) an dem Handgriff (30) zu befestigen.

9. Einstellvorrichtung gemäß Anspruch 2, wobei das Auslassventil (60) aufweist:
ein Gehäuse (61), das in den zweiten Raum (37) des Handgriffs (30) eingepasst ist, wobei das Gehäuse (61) ein erstes Ende, ein zweites Ende und einen Längskanal (612) aufweist, der darin definiert ist;
einen Kern (62), der sich bewegbar durch das Gehäuse (61) erstreckt, wobei der Kern (62) ein vergrößertes innen liegendes Ende zum Absperren des Längskanals (612) von dem zweiten Ende aufweist; und
eine Feder (64) zum Bewegen des vergrößerten innen liegenden Endes des Kerns (62) in Richtung des zweiten Endes des Gehäuses (61) hin, wobei der Kern (62) ein außen liegendes Ende aufweist, das aus dem ersten Ende des Gehäuses (61) freiliegt, um betätigt zu werden.

10. Einstellvorrichtung gemäß Anspruch 9, wobei das Auslassventil (60) einen Drückknopf (63) aufweist, der mit dem außen liegenden Ende des Kerns (62) verbunden ist, wobei die Feder (64) zwischen dem Drückknopf (63) und dem ersten Ende des Gehäuses (61) zusammengedrückt ist, wobei der Kern (62) in der Nähe des ersten Endes ein daran ausgebildetes Gewinde (621) aufweist, wobei der Drückknopf (63) ein Gewindeloch (632) definiert, um das Gewinde (621) des Kerns (62) aufzunehmen, so dass der Drückknopf (63) an dem Kern (62) befestigt ist.

11. Einstellvorrichtung gemäß Anspruch 9, wobei das Gehäuse (61) eine Ausnehmung (613) aufweist, die zum Aufnehmen der Feder (64) in dessen erstem Ende definiert ist.

12. Einstellvorrichtung gemäß Anspruch 9, wobei das Auslassventil (60) eine Dichtung (622) aufweist, die an dem vergrößerten innen liegenden Ende um den Kern (62) herum gelegt ist.

13. Einstellvorrichtung gemäß Anspruch 1, wobei der Handgriff (30) ein daran ausgebildetes Anschlussstück (31) zum Verbinden mit einer Leitung aufweist, die zu einem Luftverdichter führt.

14. Einstellvorrichtung gemäß Anspruch 1, aufweisend einen an der Stange (40) befestigten Andrücker (41) für den Kontakt mit dem Kolben des Folgezylinders.

## Revendications

1. Outil de réajustement pour piston de cylindre récepteur d'un frein, l'outil de réajustement comprenant :
une plaque fixe (23) pouvant être fixée au cylindre récepteur ;
un cylindre (20) fixé à la plaque fixe (23) ;
un piston (25) mobile dans le cylindre (20);
une tige (40) s'étendant à travers le cylindre (20) et reliée au piston (25);
une poignée (30) reliée au cylindre (20) de sorte que de l'air sous pression peut entrer dans le cylindre (20) à travers la poignée (30) et entraîner le piston (25) et, par conséquent, la tige (40) alors qu'il entre dans le cylindre (20) ;
une soupape d'admission (50) disposée sur la poignée (30) afin de contrôler l'admission de l'air sous pression dans le cylindre (20) à travers la poignée (30) ; et
une soupape de refoulement (60) disposée sur la poignée (30) afin de contrôler la libération de l'air sous pression à partir du cylindre (20) à travers la poignée (30), **caractérisé en ce que**
la poignée (30) est montée sur le cylindre (20) suivant un angle par rapport à l'axe de la tige (40),
la tige (40) s'étend à travers la paroi d'extrémité du cylindre (20) à l'opposé de la paroi d'extrémité à proximité de la plaque fixe (23), et
une poignée de traction de tige (42) est fixée à la tige (40) sur la partie faisant saillie à partir du cylindre à l'opposé de la plaque fixe (23) afin de faciliter la traction de la tige (40) après que l'air sous pression ait été libéré à partir du cylindre (20).

2. Outil de réajustement selon la revendication 1, dans lequel le cylindre (20) définit un espace (24) destiné à contenir le piston (25), dans lequel la poignée (30) comprend un premier canal (32) en communication avec l'espace (24) du cylindre (20), un premier espace (34) en communication avec le premier canal (32) afin de contenir la soupape d'admission (50), un deuxième canal (33) en communication avec le premier espace (34) d'une part et pour une communication avec un compresseur d'air d'autre part, un troisième canal (36) en communication avec le premier canal (32), et un deuxième espace (37) en communication avec le canal (36) afin de contenir la soupape de refoulement (60).

3. Outil de réajustement selon la revendication 2, dans lequel la soupape d'admission (50) comprend :
un logement (51) ajusté dans le premier espace (34), le logement (51) comprenant une première extrémité, une deuxième extrémité, un épaulement (525) formé sur celui-ci afin de diviser le premier espace (34) en une première partie et en une deuxième partie, un canal longitudinal (511) en communication avec la deuxième partie du premier espace (34) et un canal transversal (513) en communication avec le canal longitudinal (511) d'une part et en communication avec la première partie du premier espace (34) d'autre part;
un noyau (52) s'étendant de façon mobile à travers le logement (51), le noyau (52) comprenant une bride (525) formée sur celui-ci afin de bloquer le canal longitudinal (511) de la première extrémité ; et
un ressort (53) comprimé entre une extrémité fermée de l'espace (34) et la bride (525) du noyau (52) afin de pousser l'épaulement (525) du noyau (52) vers la deuxième extrémité du logement (51).

4. Outil de réajustement selon la revendication 3, dans lequel le noyau (52) comprend une extrémité externe (521) exposée à partir de la première extrémité du logement (51) de sorte que le noyau (52) peut être poussé par l'extrémité externe (521).

5. Outil de réajustement selon la revendication 3, dans lequel le noyau (52) comprend une extrémité interne (522) exposée à partir de la deuxième extrémité du logement (51) et insérée dans le ressort (53).

6. Outil de réajustement selon la revendication 3, dans lequel la soupape d'admission (50) comprend un levier (54) relié à la poignée (30) et disposé contre l'extrémité externe (521) du noyau (52) de sorte que le levier (54) peut fonctionner afin de pousser le noyau (52) par l'extrémité externe (521), dans lequel la poignée (30) comprend une oreille (35) formée sur celle-ci, dans lequel le levier (54) comprend deux oreilles (542) reliées à l'oreille (35) de la poignée (30).

7. Outil de réajustement selon la revendication 3, dans lequel la soupape d'admission (50) comprend un joint (524) disposé autour du noyau (52) afin d'assurer l'étanchéité du canal longitudinal (511) à proximité de la première extrémité, dans lequel le noyau (52) définit une rainure (523) destinée à recevoir le joint (524).

8. Outil de réajustement selon la revendication 3, dans lequel la poignée (30) comprend un filet (341) formé sur la paroi de la première partie du premier espace (34), dans lequel le logement (51) comprend un filet (512) mis en prise avec le filet (341) de la poignée (30) afin de fixer la soupape d'admission (50) à la poignée (30).

9. Outil de réajustement selon la revendication 2, dans lequel la soupape de refoulement (60) comprend :
un logement (61) ajusté dans le deuxième espace (37) de la poignée (30), le logement (61) comprenant une première extrémité, une deuxième extrémité et un canal longitudinal (612) défini dans celui-ci ;
un noyau (62) s'étendant de façon mobile à travers le logement (61), le noyau (62) comprenant une extrémité interne agrandie destinée à bloquer le canal longitudinal (612) de la deuxième extrémité ; et
un ressort (64) destiné à déplacer l'extrémité interne agrandie du noyau (62) vers la deuxième extrémité du logement (61), dans lequel le noyau (62) comprend une extrémité externe exposée à partir de la première extrémité du logement (61) afin de pouvoir fonctionner.

10. Outil de réajustement selon la revendication 9, dans lequel la soupape de refoulement (60) comprend un bouton (63) relié à l'extrémité externe du noyau (62), dans lequel le ressort (64) est comprimé entre le bouton (63) et la première extrémité du logement (61), dans lequel le noyau (62) comprend un filet (621) formé sur celui-ci à proximité de la première extrémité, dans lequel le bouton (63) définit un trou de vis (632) afin de recevoir le filet (621) du noyau (62) de façon à fixer le bouton (63) au noyau (62).

11. Outil de réajustement selon la revendication 9, dans lequel le logement (61) comprend un évidement (613) défini dans la première extrémité de celui-ci afin de recevoir le ressort (64).

12. Outil de réajustement selon la revendication 9, dans lequel la soupape de refoulement (60) comprend un joint (622) disposé autour du noyau (62) contre l'extrémité interne agrandie.

13. Outil de réajustement selon la revendication 1, dans lequel la poignée (30) comprend un raccord (31) formé sur celle-ci pour une connexion à un tuyau conduisant au compresseur d'air.

14. Outil de réajustement selon la revendication 1, comprenant un poussoir (41) fixé à la tige (40) pour un contact avec le piston du cylindre récepteur.
